# EUROPEAN PATENT APPLICATION

(11) **EP 4 841 798 A1**
(43) Date of publication of application: **18.11.2026**
(21) Application number: 26746193.7
(22) Date of filing: 15.01.2026
(51) Int. Cl.: H01M 50/507, H01M 50/569, H01M 50/519, H01M 10/48, H01M 10/42, H01M 50/588, H01M 50/591

(54) **BATTERY CELL ASSEMBLY, AND BATTERY PACK AND VEHICLE COMPRISING SAME**

(30) Priority: 24.01.2025 KR 20250011844; 12.06.2025 KR 20250076865
(71) Applicant: LG Energy Solution, Ltd., Seoul 07335 (KR)
(72) Inventor: KIM, Min Bum, Daejeon 34122 (KR); LEE, Hyoung Suk, Daejeon 34122 (KR); CHOI, Jong Hwa, Daejeon 34122 (KR)
(74) Representative: Plasseraud IP
(86) International application number: PCT/KR2026/000904
(87) International publication number: WO 2026/160759

(57) **Abstract**

According to exemplary embodiments, a battery cell assembly is provided. The battery cell assembly may include: a first cell stack including a plurality of first battery cells arranged in a first horizontal direction; a second cell stack including a plurality of second battery cells arranged in the first horizontal direction, the second cell stack being adjacent to the first cell stack in the first horizontal direction; and a busbar frame assembly on a side surface of the first and second cell stacks in a second horizontal direction. The busbar frame assembly may include: a busbar frame extending in the first horizontal direction so as to cover the side surface of the first and second cell stacks in the second horizontal direction; a first positive terminal busbar and a first negative terminal busbar disposed on the busbar frame and respectively connected to the first battery cells; and a second positive terminal busbar and a second negative terminal busbar disposed on the busbar frame and respectively connected to the second battery cells.

## Description

### [Technical Field]

The present disclosure relates to a battery cell assembly, a battery pack including the same, and a vehicle. This application claims the benefit of Korean Patent Application No. 10-2025-0076865, filed on June 12, 2025, and Korean Patent Application No. 10-2025-0011844, filed on January 24, 2025, the disclosures of which are incorporated herein by reference.

### [Background]

Unlike primary batteries, secondary batteries can be charged and discharged a plurality of times. Secondary batteries are widely used as energy sources for various wireless devices such as mobile phones, laptops, and cordless vacuum cleaners. Recently, owing to improvements in energy density and economies of scale, the manufacturing cost per unit capacity of secondary batteries has been dramatically reduced, and the driving range of battery electric vehicles (BEVs) has increased to a level comparable to that of internal combustion engine vehicles. Accordingly, the primary application of secondary batteries is shifting from mobile devices to mobility.

The technology development trend for secondary batteries for mobility focuses on improving energy density and safety. Herein, the energy density of a secondary battery refers to the maximum electrical energy that the battery can store divided by the mass of the battery. Because the high energy density of a secondary battery is directly related to the driving efficiency and driving range of mobility applications, various studies are being conducted to improve the energy density of secondary batteries.

### [Summary]

### [Technical Problem]

An object of the technical concept of the present disclosure is to provide a vehicle having improved energy efficiency and space utilization.

### [Technical Solution]

According to exemplary embodiments for solving the above-described problem, a battery cell assembly is provided. The battery cell assembly may include: a first cell stack including a plurality of first battery cells arranged in a first horizontal direction; a second cell stack including a plurality of second battery cells arranged in the first horizontal direction, the second cell stack being adjacent to the first cell stack in the first horizontal direction; and a busbar frame assembly on a side surface of the first and second cell stacks in a second horizontal direction. The busbar frame assembly may include: a busbar frame extending in the first horizontal direction so as to cover the side surface of the first and second cell stacks in the second horizontal direction; a first positive terminal busbar and a first negative terminal busbar disposed on the busbar frame and respectively connected to the first battery cells; and a second positive terminal busbar and a second negative terminal busbar disposed on the busbar frame and respectively connected to the second battery cells.

The busbar frame may be integrally formed.

The battery cell assembly may further include: first and second sensing assemblies connected to the busbar frame assembly. The first sensing assembly may be configured to measure a voltage of the first battery cells, and the second sensing assembly may be configured to measure a voltage of the second battery cells.

The second sensing assembly may further include: a circuit board; and temperature sensors disposed on the circuit board and configured to individually measure a temperature of each of the second battery cells.

The number of the temperature sensors may be equal to the number of the second battery cells.

The first sensing assembly may include a flexible flat cable (FFC). The second
sensing assembly may include a flexible printed circuit board (FPCB).

The busbar frame assembly may include: a first insulating cover disposed on the busbar frame and covering the first positive terminal busbar, the first negative terminal busbar, the second positive terminal busbar, and the second negative terminal busbar; a circuit assembly disposed on the first insulating cover; and a second insulating cover disposed on the first insulating cover and covering the circuit assembly.

The circuit assembly may include: a first circuit board configured to monitor a voltage of the first battery cells; and a second circuit board configured to monitor a voltage of the second battery cells.

An output voltage of the first cell stack may be different from an output voltage of the second cell stack.

An output voltage of the first cell stack may be greater than an output voltage of the second cell stack.

The number of the first battery cells may be different from the number of the second battery cells.

The number of the first battery cells may be greater than the number of the second battery cells.

The second cell stack may be configured to provide an output voltage of from 10 V to 15 V.

According to exemplary embodiments for solving the above-described problem, a battery pack is provided. The battery pack may include first and second battery cell assemblies. The number of terminal busbars of the first battery cell assembly may be different from the number of terminal busbars of the second battery cell assembly.

### [Advantageous Effects]

A battery pack according to exemplary embodiments of the present disclosure may, as a single battery cell assembly, integrate main battery cells that supply power to the powertrain system and auxiliary battery cells that provide supplementary functions for the electrical components of the vehicle. Accordingly, space utilization at the vehicle level may be improved, and the weight of the battery pack may be reduced, thereby improving the electrical energy consumption efficiency of the vehicle.

The effects obtainable from the exemplary embodiments of the present disclosure are not limited to those mentioned above. Other effects not mentioned will be clearly derived and understood by those skilled in the art to which the exemplary embodiments of the present disclosure pertain, from the following description. That is, unintended effects resulting from the practice of the exemplary embodiments of the present disclosure may also be derived from the exemplary embodiments of the present disclosure by those skilled in the art.

### [Brief Description of the Drawings]

FIG. 1 is a perspective view of a battery cell assembly according to exemplary embodiments.
FIG. 2 is an exploded perspective view of a battery cell assembly according to exemplary embodiments.
FIG. 3 is an enlarged perspective view of a busbar frame assembly according to exemplary embodiments.
FIG. 4 is an enlarged perspective view of a sensing assembly according to exemplary embodiments.
FIG. 5 is a plan view of a battery pack according to exemplary embodiments.
FIG. 6 is a perspective view of a battery cell assembly according to exemplary embodiments.
FIG. 7 is a schematic diagram showing a connection structure of a vehicle according to exemplary embodiments.

### [Best Mode for Carrying Out the Invention]

Hereinafter, preferred embodiments of the present disclosure will be described in detail with reference to the accompanying drawings. Prior to the description, it should be understood that the terms and words used in the specification and the claims shall not be construed as being limited to their ordinary or dictionary meanings, but shall be interpreted as having meanings and concepts consistent with the technical concept of the present disclosure, based on the principle that the inventor is permitted to appropriately define the concept of a term in order to describe his or her own invention in the best manner.

Accordingly, the embodiments described in this specification and the configurations illustrated in the drawings are only the most preferred embodiments of the present disclosure and do not represent the entire technical concept of the present disclosure. Therefore, it should be understood that there may be various equivalents and modifications that may replace them at the time of filing this application.

In addition, in describing the present disclosure, when it is determined that a detailed description of related known configurations or functions may obscure the gist of the present disclosure, the detailed description thereof will be omitted.

Since embodiments of the present disclosure are provided for those skilled in the art to more completely understand the present disclosure, the shapes and sizes of components in the drawings may be exaggerated, omitted, or schematically illustrated for clearer description. Accordingly, the size or ratio of each component does not entirely reflect the actual size or ratio.

### (First Embodiment)

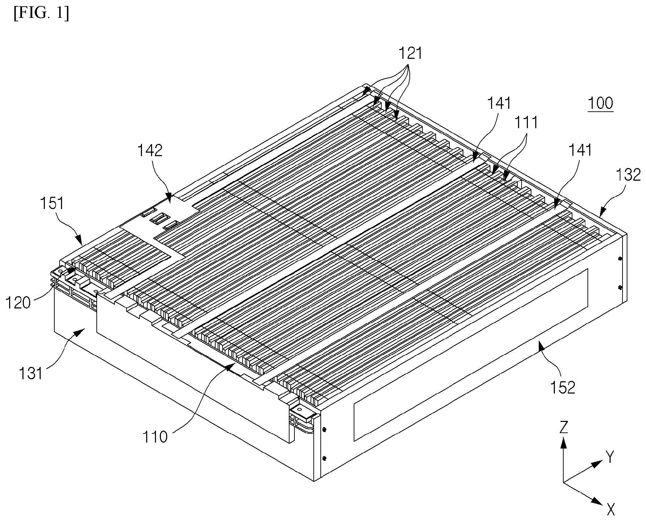

FIG. 1 is a perspective view illustrating a battery cell assembly according to exemplary embodiments.

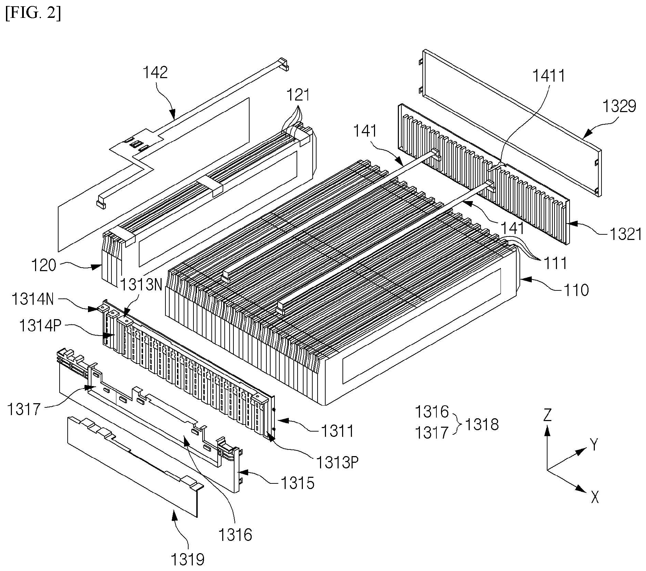

FIG. 2 is an exploded perspective view illustrating a battery cell assembly according to exemplary embodiments. In FIG. 2, the side plates 151, 152 are omitted.

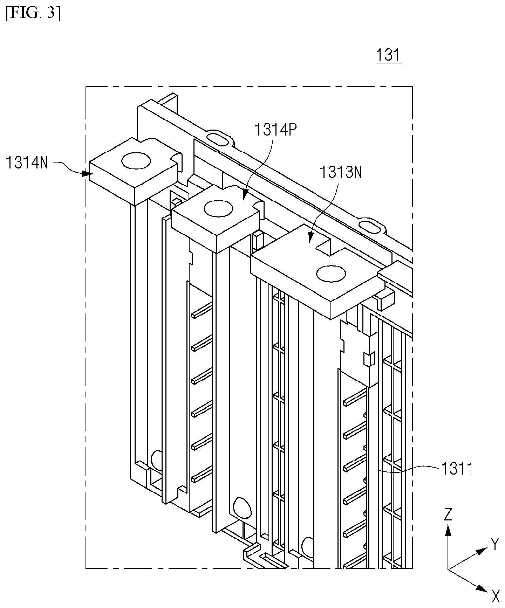

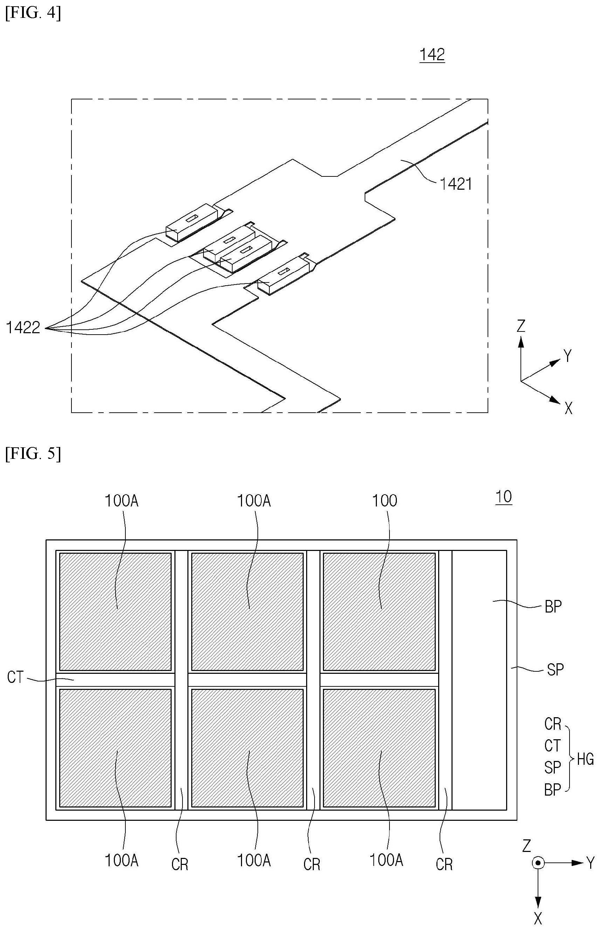

FIG. 3 is an enlarged perspective view illustrating a busbar frame assembly 131 according to exemplary embodiments. FIG. 4 is an enlarged perspective view illustrating a sensing assembly 142 according to exemplary embodiments.

Referring to FIGS. 1 through 4, the battery cell assembly 100 may include a first cell stack 110, a second cell stack 120, busbar frame assemblies 131, 132, sensing assemblies 141, 142, and side plates 151, 152.

The first cell stack 110 may include a plurality of battery cells 111 arranged in the X direction. The second cell stack 120 may include a plurality of battery cells 121 arranged in the X direction. The second cell stack 120 may be adjacent to the first cell stack 110 in the X direction. The first and second cell stacks 110, 120 may form a single cell stack.

Each of the plurality of battery cells 111, 121 may be a lithium-ion battery. Each of the plurality of battery cells 111 and 121 may include an electrode assembly, an electrolyte, and a case. Each of the plurality of battery cells 111 and 121 may be any one of a cylindrical battery cell, a prismatic battery cell, and a pouch-type battery cell. The case of the cylindrical battery cell may be a cylindrical metal can. The electrode assembly of the cylindrical battery cell is housed in the cylindrical metal can. The case of the prismatic battery cell may be a prismatic metal case. The electrode assembly of the prismatic battery cell is housed in the prismatic metal can. The case of the pouch-type battery cell may be a pouch sheet. The electrode assembly of the pouch-type battery cell is housed in a pouch case including an aluminum laminate sheet.

The electrode assembly may include a positive electrode, a negative electrode, and a separator interposed between the positive electrode and the negative electrode. The electrode assembly may be any one of a jelly-roll type and a stack type. The jelly-roll-type electrode assembly may include a wound structure of a positive electrode, a negative electrode, and a separator interposed therebetween. The stack-type electrode assembly may include a plurality of positive electrodes, a plurality of negative electrodes, and a plurality of separators interposed therebetween, which are sequentially stacked.

The battery cells 111 may be connected to each other to form the first cell stack 110. In one embodiment, the battery cells 111 may be connected in series. In another embodiment, the plurality of battery cells 111 may form a plurality of banks. Each of the plurality of banks may include one or more battery cells 111. The one or more battery cells 111 in each of the plurality of banks may be connected in parallel with each other. The plurality of banks may be connected in series with each other. The number of banks connected in series and the number of battery cells 111 included in the plurality of banks may be determined according to the magnitudes of the voltage and current to be output from the battery cell assembly 100.

The battery cells 121 may be connected to each other to form the second cell stack 120. In one embodiment, the battery cells 121 may be connected in series. In another embodiment, the plurality of battery cells 121 may form a plurality of banks. Each of the plurality of banks may include one or more battery cells 121. The one or more battery cells 121 in each of the plurality of banks may be connected in parallel with each other. The plurality of banks may be connected in series with each other. The number of banks connected in series and the number of battery cells 121 included in the plurality of banks may be determined according to the magnitudes of the voltage and current to be output from the battery cell assembly 100.

The first and second cell stacks 110 and 120 may be electrically separated from each other. The battery cells 111 of the first cell stack 110 may not be connected to the battery cells 121 of the second cell stack 120.

The output voltage of the first cell stack 110 may be different from the output voltage of the second cell stack 120. The output voltage of the first cell stack 110 may be greater than the output voltage of the second cell stack 120.

In one embodiment, the first cell stack 110 may provide an output voltage of about 100 V or higher. In one embodiment, the first cell stack 110 may provide an output voltage of about 300 V or higher. In one embodiment, the first cell stack 110 may provide an output voltage of about 600 V or higher. In one embodiment, the first cell stack 110 may provide an output voltage of about 900 V or higher. In one embodiment, the first cell stack 110 may provide an output voltage of about 1000 V or higher. In one embodiment, the first cell stack 110 may provide an output voltage of about 2000 V or lower. In one embodiment, the first cell stack 110 may provide an output voltage of about 1500 V or lower. In one embodiment, the first cell stack 110 may provide an output voltage of about 1200 V or lower. In one embodiment, the first cell stack 110 may provide an output voltage of about 1000 V or lower. In one embodiment, the first cell stack 110 may provide an output voltage of about 900 V or lower.

In one embodiment, the second cell stack 120 may provide an output voltage of about 10 V or higher. In one embodiment, the second cell stack 120 may provide an output voltage of about 11 V or higher. In one embodiment, the second cell stack 120 may provide an output voltage of about 10 V or higher. In one embodiment, the second cell stack 120 may provide an output voltage of about 15 V or lower. In one embodiment, the second cell stack 120 may provide an output voltage of about 14 V or higher. In one embodiment, the second cell stack 120 may provide an output voltage of about 13 V or higher.

The number of battery cells 111 of the first cell stack 110 may be different from the number of battery cells 121 of the second cell stack 120. The number of battery cells 111 of the first cell stack 110 may be greater than the number of battery cells 121 of the second cell stack 120. In one embodiment, the number of battery cells 111 of the first cell stack 110 may be approximately 30 to 100, and the number of battery cells 121 of the second cell stack 120 may be 2 to 10. As a non-limiting example, the number of battery cells 111 of the first cell stack 110 may be 34, and the number of battery cells 121 of the second cell stack 120 may be 4. For example, the second cell stack 120 may include battery cells 121 having a voltage of about 3.2 V to provide an output voltage of approximately 12 V.

Battery pads (not shown) may be disposed between neighboring battery cells 111, 121. Each of the plurality of battery cells 111, 121 may be disposed between two neighboring battery pads. For example, the plurality of battery cells 111, 121 and the plurality of pads may alternate.

The plurality of pads may include a compressible material. The plurality of pads may absorb swelling of the plurality of battery cells 111, 121. The plurality of pads may be thermal barriers. According to exemplary embodiments, each of the plurality of pads may have a high melting temperature and a low thermal conductivity. According to exemplary embodiments, each of the plurality of pads may include a flame-retardant material such as ceramic and coated glass material. According to exemplary embodiments, the plurality of pads may be configured to release a fire-retarding material and a fire-extinguishing agent when a thermal runaway event occurs.

The first busbar frame assembly 131 may be on one side surface of the first and second cell stacks 110, 120 in the X direction. The second busbar frame assembly 132 may be on the other side surface of the first and second cell stacks 110, 120 in the X direction. The first busbar frame assembly 131 may be in front of the first and second cell stacks 110, 120. The second busbar frame assembly 132 may be behind the first and second cell stacks 110, 120.

The first and second busbar frame assemblies 131, 132 may be spaced apart from each other in the Y direction with the first and second cell stacks 110, 120 interposed therebetween.

The first busbar frame assembly 131 may include a busbar frame 1311, a first positive terminal busbar 1313P, a first negative terminal busbar 1313N, a first insulating cover 1315, a circuit assembly 1318, and a second insulating cover 1319.

The busbar frame 1311 may cover one side surface of the first and second cell stacks 110 and 120 in the Y direction. The busbar frame 1311 may extend in the X direction. The busbar frame 1311 may extend in the X direction so as to entirely cover the first and second battery cells 111 and 121 of the first and second cell stacks 110 and 120. The busbar frame 1311 may be integrally formed.

The busbar frame 1311 may include a plurality of slits. The plurality of slits may be configured to allow the electrode leads of the first and second battery cells 111 and 121 to pass therethrough, respectively. The electrode leads of the first and second battery cells 111 and 121 passing through the plurality of slits may be connected to each other. In one embodiment, the electrode leads may be directly connected to each other by welding. In another embodiment, the electrode leads may be welded to a busbar that connects two or more battery cells. The busbar frame 1311 may include an insulating material such as plastic.

The busbar frame 1311 may support the first positive terminal busbar 1313P, the first negative terminal busbar 1313N, the second positive terminal busbar 1314P, the second negative terminal busbar 1314N, the first insulating cover 1315, the circuit assembly 1318, and the second insulating cover 1319.

The first positive terminal busbar 1313P and the first negative terminal busbar 1313N may be connected to the first battery cells 111, respectively. The first positive terminal busbar 1313P may be connected to positive electrode leads of one or more of the first battery cells 111. The first negative terminal busbar 1313N may be connected to negative electrode leads of one or more of the first battery cells 111. The first positive terminal busbar 1313P may be welded to the positive electrode leads of one or more first battery cells 111 of the first bank. The first negative terminal busbar 1313N may be welded to the negative electrode leads of one or more first battery cells 111 of the last bank. Through the first positive terminal busbar 1313P and the first negative terminal busbar 1313N, the resultant voltage of the plurality of first battery cells 111 may be output. The first positive terminal busbar 1313P and the first negative terminal busbar 1313N may be fixed to the busbar frame 1311.

The second positive terminal busbar 1314P and the second negative terminal busbar 1314N may be connected to the second battery cells 121, respectively. The second positive terminal busbar 1314P may be connected to positive electrode leads of one or more of the second battery cells 121. The second negative terminal busbar 1314N may be connected to negative electrode leads of one or more of the second battery cells 121. The second positive terminal busbar 1314P may be welded to the positive electrode leads of one or more second battery cells 121 of the first bank. The second negative terminal busbar 1314N may be welded to the negative electrode leads of one or more second battery cells 121 of the last bank. Through the second positive terminal busbar 1314P and the second negative terminal busbar 1314N, the resultant voltage of the plurality of second battery cells 121 may be output. The second positive terminal busbar 1314P and the second negative terminal busbar 1314N may be fixed to the busbar frame 1311.

The first terminal busbars 1313P, 1313N may be electrically separated from the second battery cells 121. The first terminal busbars 1313P, 1313N may be electrically separated from the second terminal busbars 1314P, 1314N. The second terminal busbars 1314P, 1314N may be electrically separated from the first battery cells 111. The second terminal busbars 1314P, 1314N may be electrically separated from the first terminal busbars 1313P, 1313N.

The first insulating cover 1315 may be on the busbar frame 1311. The first insulating cover 1315 may cover the first positive terminal busbar 1313P, the first negative terminal busbar 1313N, the second positive terminal busbar 1314P, and the second negative terminal busbar 1314N. Accordingly, the electrical components on the busbar frame 1311 may be protected. The first insulating cover 1315 may include an insulating material such as plastic. In one embodiment, the first insulating cover 1315 may include a recess for accommodating the circuit assembly 1318.

The circuit assembly 1318 may be on the first insulating cover 1315. The circuit assembly 1318 may be fixed on the first insulating cover 1315.

The circuit assembly 1318 may include a first circuit board 1316 and a second circuit board 1317. The first circuit board 1316 may be configured to measure and monitor physical characteristics of the first battery cells 111 of the first cell stack 110. For example, the first circuit board 1316 may be configured to measure and monitor the voltage and temperature of the first battery cells 111. The second circuit board 1317 may be configured to measure and monitor physical characteristics of the second battery cells 121 of the second cell stack 120. For example, the second circuit board 1317 may be configured to measure and monitor the voltage and temperature of the second battery cells 121. In one embodiment, the first and second circuit boards 1316, 1317 may be configured as separate boards.

The first and second circuit boards 1316, 1317 may collect cell-level data. The first and second circuit boards 1316, 1317 may each be a slave battery management system (Slave BMS). The first and second circuit boards 1316, 1317 may transmit the sensing data of the first and second battery cells 111, 121 to a master battery management system (Master BMS). In one embodiment, the slave BMS and the master BMS may communicate via wired communication such as CAN, SPI, UART, or RS-485. In another embodiment, the slave BMS and the master BMS may communicate wirelessly.

The second insulating cover 1319 may be on the first insulating cover 1315. The second insulating cover 1319 may cover the circuit assembly 1318. Accordingly, the circuit assembly 1318 may be protected. The second insulating cover 1319 may include an insulating material such as plastic.

The second busbar frame assembly 132 is generally similar to the first busbar frame assembly 131, except that it does not include the terminal busbars 1313P, 1313N, 1314P, and 1314N.

The second busbar frame assembly 132 may include a busbar frame 1321, a circuit board (not shown), and an insulating cover 1329.

A temperature sensor 1411 may be provided on the busbar frame 1321. The temperature sensor 1411 may be fixed on the busbar frame 1321. The temperature sensor 1411 may be configured to measure the temperature at a specific point of the first cell stack 110.

The circuit board may be on the busbar frame 1321. The circuit board may be fixed on the busbar frame 1321. The circuit board may include a first circuit board and a second circuit board. The first circuit board may be configured to measure and monitor physical characteristics of the first battery cells 111 of the first cell stack 110. The second circuit board may be configured to measure and monitor physical characteristics of the second battery cells 121 of the second cell stack 120. In one embodiment, the first and second circuit boards may be configured as separate boards. In another embodiment, the first and second circuit boards may be configured as a single board including separate and discrete circuit lines. In one embodiment, the circuit board of the second busbar frame assembly 132 may be a flexible printed circuit board (FPCB).

Each of the first and second sensing assemblies 141, 142 may be connected to the first and second busbar frame assemblies 131, 132.

The first sensing assembly 141 may be configured to measure physical characteristics of the first battery cells 111 of the first cell stack 110. In one embodiment, the first sensing assembly 141 may be configured to measure the voltage of the first battery cells 111. The positive electrode leads and negative electrode leads of the first battery cells 111 that are welded to each other may form nodes within the battery cell assembly 100. The first sensing assembly 141 may be configured to measure the voltage of the nodes. The voltage of the first battery cells 111 measured by the first sensing assembly 141 may be computed and monitored by the first circuit board 1316. In one embodiment, the first sensing assembly 141 may be a flexible flat cable (FFC).

The second sensing assembly 142 may be configured to measure physical characteristics of the second battery cells 121 of the second cell stack 120. In one embodiment, the second sensing assembly 142 may be configured to measure the voltage of the second battery cells 121. The positive electrode leads and negative electrode leads of the second battery cells 121 that are welded to each other may form nodes within the battery cell assembly 100. The second sensing assembly 142 may be configured to measure the voltage of the nodes. The voltage of the second battery cells 121 measured by the second sensing assembly 142 may be computed and monitored by the second circuit board 1317.

In one embodiment, the second sensing assembly 142 may be configured to measure the temperature of the second battery cells 121. Referring also to FIG. 4, the second sensing assembly 142 may include a circuit board 1421 and temperature sensors 1422. The circuit board 1421 may be, for example, a flexible printed circuit board (FPCB). The temperature sensors 1422 may be on the circuit board 1421. The temperature sensors 1422 may be configured to individually measure the temperature of each of the second battery cells 121. In one embodiment, the number of temperature sensors 1422 may be equal to the number of second battery cells 121. Each of the temperature sensors 1422 may be configured to measure the temperature of a corresponding one of the second battery cells 121.

The first and second side plates 151, 152 may be on both sides of the first and second cell stacks 110, 120 in the X direction. The first and second side plates 151, 152 may be spaced apart from each other in the X direction with the first and second cell stacks 110, 120 interposed therebetween. The first and second side plates 151, 152 may support the first and second cell stacks 110, 120 from both sides in the X direction. Each of the first and second side plates 151, 152 may be connected to the first and second busbar frame assemblies 131, 132.

### (Second Embodiment)

FIG. 5 is a plan view illustrating a battery pack 10 according to exemplary embodiments. In FIG. 5, the pack lid is omitted.

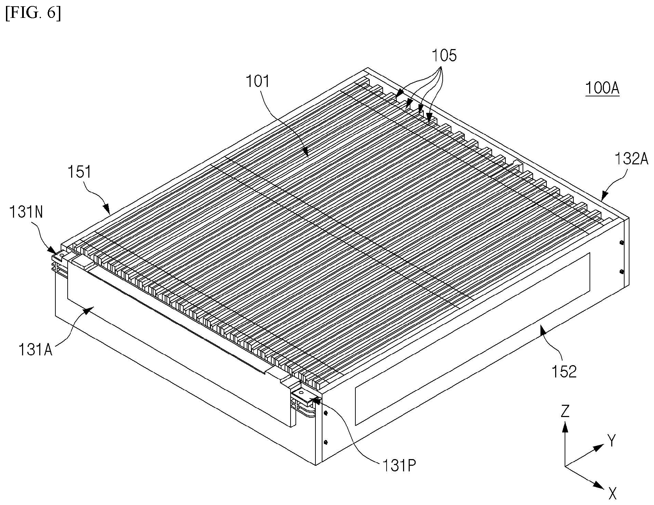

FIG. 6 is a perspective view illustrating a battery cell assembly 100A according to exemplary embodiments.

In FIGS. 5 and 6, components having the same reference numerals as those in FIGS. 1 through 4 may be subject to the descriptions given in the first embodiment, and duplicate descriptions thereof will be omitted.

Referring to FIGS. 5 and 6, the battery pack 10 may include a pack housing HG and battery cell assemblies 100, 100A. The battery cell assemblies 100, 100A may be mounted within a mounting region inside the pack housing HG.

The pack housing HG may include a base plate BP, side plates SP, a center beam CT, and cross beams CR. The base plate BP may support the battery cell assemblies 100, 100A from below in the Z direction. The base plate BP may extend in the X direction and the Y direction.

The side plates SP may be on or near edges of the base plate BP. The side plates SP may be substantially perpendicular to the mounting surface of the base plate BP. The side plates SP may surround the center beam CT, the cross beams CR, and the battery cell assemblies 100, 100A.

The center beam CT may be on the base plate BP. The center beam CT may extend in the Y direction across the base plate BP. The center beam CT may partition the battery cell assemblies 100, 100A in the X direction. The cross beams CR may extend in the X direction across the base plate BP. The cross beams CR may partition the battery cell assemblies 100, 100A in the Y direction.

The battery cell assemblies 100A may be different from the battery cell assemblies 100. To the battery cell assemblies 100, the structures described with reference to FIGS. 1 through 4 may be equally or similarly applied.

Referring to FIG. 6, the battery cell assembly 100A may include a cell stack 101, busbar frame assemblies 131A, 132A, and side plates 151, 152. The cell stack 101 may include a plurality of battery cells 105 arranged in the X direction.

The battery cell assembly 100A may differ from the battery cell assembly 100 in the number of terminal busbars 131P and 131N. The battery cell assembly 100A may include a positive terminal busbar 131P and a negative terminal busbar 131N connected to the battery cells 105. In contrast, the battery cell assembly 100, as described above with reference to FIGS. 1 through 4, may include first terminal busbars 1313P, 1313N connected to the first battery cells 111 and second terminal busbars 1314P, 1314N connected to the second battery cells 121.

The battery cell assembly 100A differs from the battery cell assembly 100 in that the busbar frame assembly 131A includes only two terminal busbars 131P, 131N.

### (Third Embodiment)

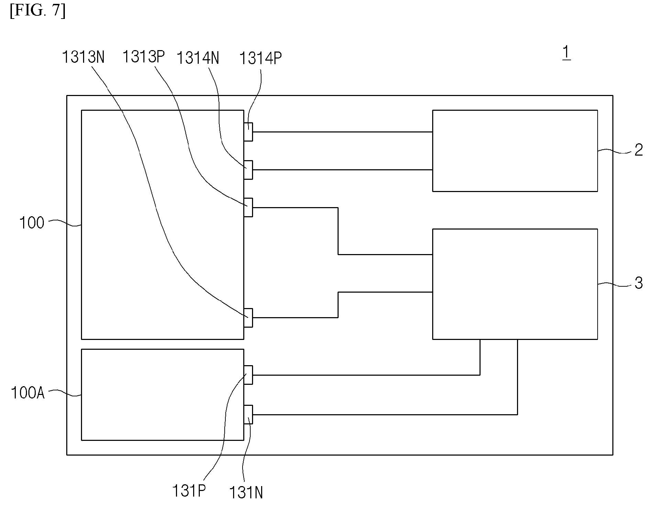

FIG. 7 is a schematic diagram showing a connection structure of a vehicle according to exemplary embodiments.

In FIG. 7, components having the same reference numerals as those in FIGS. 1 through 6 may be subject to the descriptions given in the first and second embodiments, and duplicate descriptions thereof will be omitted.
The vehicle 1 may include electrical components 2, a motor 3, and battery cell assemblies 100, 100A. The electrical components 2 may include electronic devices other than the motor 3. The electrical components 2 may include devices responsible for all electrical and electronic control functions of the vehicle, such as lighting control, sensors, and communications.

In one embodiment, the electrical components 2 may include powertrain control system devices. For example, the electrical components 2 may include an Engine Control Unit (ECU), a Motor Control Unit (MCU), a Transmission Control Unit (TCU), an inverter, an on-board charger (OBC), and a DC-DC converter.

In one embodiment, the electrical components 2 may include battery and energy management devices. For example, the electrical components 2 may include a Battery Management System (BMS) and a Power Distribution Unit (PDU).

In one embodiment, the electrical components 2 may include driving control devices. For example, the electrical components 2 may include an ABS/ESC controller, Electronic Power Steering (EPS), and an ADAS controller.

In one embodiment, the electrical components 2 may include control devices for lighting, doors, wipers, and window opening/closing, integrated systems such as audio and navigation, an instrument cluster display, and vehicle function control UIs.

Referring to FIGS. 5 through 7 together, the battery cell assemblies 100A may be configured to supply power to the motor 3. Each of the battery cell assemblies 100A may include a positive terminal busbar 131P and a negative terminal busbar 131N. The positive and negative terminal busbars 131P, 131N of each of the battery cell assemblies 100A may be connected to the motor 3.

Referring to FIGS. 2, 5, and 7 together, the battery cell assembly 100 may be configured to supply power to the electrical components 2 and the motor 3, respectively. The battery cell assembly 100 may include a first positive terminal busbar 1313P, a first negative terminal busbar 1313N, a second positive terminal busbar 1314P, and a second negative terminal busbar 1314N. The first positive terminal busbar 1313P and the first negative terminal busbar 1313N may be connected to the motor 3. The second positive terminal busbar 1314P and the second negative terminal busbar 1314N may be connected to the electrical components 2.

Accordingly, the first battery cells 111 of the first cell stack 110 may be configured to supply power to the main powertrain system of the vehicle, such as the motor 3, through the first positive terminal busbar 1313P and the first negative terminal busbar 1313N. The second battery cells 121 of the second cell stack 120 may be configured to supply power to auxiliary systems of the vehicle, such as the electrical components 2, through the second positive terminal busbar 1314P and the second negative terminal busbar 1314N.

According to exemplary embodiments of the present disclosure, the first and second battery cells 111, 121 can be implemented as a single battery cell assembly 100. The first and second battery cells 111, 121 may share structures such as the busbar frame assemblies 131, 132 within the same battery cell assembly 100. At the same time, each of the first battery cells 111 and the second battery cells 121 may be configured to supply power to different devices.

Accordingly, compared to the prior art in which a unit including the first battery cells 111 (i.e., a main battery pack) and a unit including the second battery cells 121 (i.e., an auxiliary battery pack) are separately provided, the number of battery packs provided in the vehicle can be reduced. As a result, the manufacturing cost and weight of the battery pack are reduced, thereby improving the energy efficiency of the vehicle, and the space utilization inside the vehicle can be increased. In addition, since the first and second battery cells 111, 121 are managed as a single unit, there is an advantage in that management is facilitated.

The present disclosure has been described above in more detail through the drawings and embodiments. However, the configurations described in the drawings or embodiments described in this specification are only embodiments of the present disclosure and do not represent the entire technical concept of the present disclosure. Therefore, it should be understood that there may be various equivalents and modifications that may replace them at the time of filing this application.

## Claims

1. A battery cell assembly comprising:
a first cell stack comprising a plurality of first battery cells arranged in a first horizontal direction;
a second cell stack comprising a plurality of second battery cells arranged in the first horizontal direction, the second cell stack being adjacent to the first cell stack in the first horizontal direction; and
a busbar frame assembly on a side surface of the first and second cell stacks in a second horizontal direction, wherein
the busbar frame assembly comprises:
a busbar frame extending in the first horizontal direction so as to cover the side surface of the first and second cell stacks in the second horizontal direction;
a first positive terminal busbar and a first negative terminal busbar disposed on the busbar frame and respectively connected to the first battery cells; and
a second positive terminal busbar and a second negative terminal busbar disposed on the busbar frame and respectively connected to the second battery cells.

2. The battery cell assembly of claim 1, wherein
the busbar frame is integrally formed.

3. The battery cell assembly of claim 1, further comprising:
first and second sensing assemblies connected to the busbar frame assembly, wherein
the first sensing assembly is configured to measure a voltage of the first battery cells, and
the second sensing assembly is configured to measure a voltage of the second battery cells.

4. The battery cell assembly of claim 1, wherein
the second sensing assembly further comprises:
a circuit board; and
temperature sensors disposed on the circuit board and configured to individually measure a temperature of each of the second battery cells.

5. The battery cell assembly of claim 4, wherein
the number of the temperature sensors is equal to the number of the second battery cells.

6. The battery cell assembly of claim 3, wherein
the first sensing assembly comprises a flexible flat cable (FFC), and
the second sensing assembly comprises a flexible printed circuit board (FPCB).

7. The battery pack of claim 1, wherein
the busbar frame assembly comprises:
a first insulating cover disposed on the busbar frame and covering the first positive terminal busbar, the first negative terminal busbar, the second positive terminal busbar, and the second negative terminal busbar;
a circuit assembly disposed on the first insulating cover; and
a second insulating cover disposed on the first insulating cover and covering the circuit assembly.

8. The battery pack of claim 7, wherein
the circuit assembly comprises:
a first circuit board configured to monitor a voltage of the first battery cells; and
a second circuit board configured to monitor a voltage of the second battery cells.

9. The battery cell assembly of claim 1, wherein
an output voltage of the first cell stack is different from an output voltage of the second cell stack.

10. The battery cell assembly of claim 1, wherein
an output voltage of the first cell stack is greater than an output voltage of the second cell stack.

11. The battery cell assembly of claim 1, wherein
the number of the first battery cells is different from the number of the second battery cells.

12. The battery cell assembly of claim 1, wherein
the number of the first battery cells is greater than the number of the second battery cells.

13. The battery cell assembly of claim 1, wherein
the second cell stack is configured to provide an output voltage of from 10 V to 15 V.

14. A battery pack comprising first and second battery cell assemblies, wherein
the number of terminal busbars of the first battery cell assembly is different from the number of terminal busbars of the second battery cell assembly.
